# EUROPÄISCHE PATENTANMELDUNG

(11) **EP 0 637 713 A1**
(43) Veröffentlichungstag der Anmeldung: **08.02.1995**
(21) Anmeldenummer: 94112112.1
(22) Anmeldetag: 03.08.1994
(51) Int. Cl.: F16K 37/00

(54) **Diagnose-System für Regel- und Absperrventile**

(30) Priorität: 05.08.1993 DE 4326343
(71) Anmelder: HONEYWELL AG, D-63067 Offenbach (DE)
(72) Erfinder: Engel, Hans O., Dipl.-Ing., D-63454 Hanau 6 (DE)
(74) Vertreter: Herzbach, Dieter, Dipl.-Ing.

(57) **Zusammenfassung**

Ein Diagnose-System für Regel- und Absperrventile benutzt den Prozessor eines intelligenten Stellungsreglers (14) als digitalen Signalprozessor (46), der an den Betrieb des Ventils überwachende bzw. Betriebsgrößen des Ventils messende Sensoren (32-38) angeschlossen ist und bei Abweichung der gemessenen Werte von zuvor bei einwandfreiem Betrieb des Ventils aufgenommenen Vergleichs-Meßwerten ein Alarmsignal gibt.

## Beschreibung

Die vorliegende Erfindung bezieht sich auf ein Diagnose-System nach dem Gattungsbegriff des Patentanspruches 1.

Ein ständig steigender Wettbewerb in der freien Wirtschaft machen Kostensenkungen und eine Verbesserung der Effizienz notwendig. Diese Forderung ist am ehesten durch eine bessere Auslastung bestehender Anlagen und eine Steigerung der Anlagenleistung zu erreichen. Unvorhergesehene Stillstände von Anlagen oder Anlageteilen, verursacht durch ausgefallene Komponenten, wie beispielsweise Regelventile, Meßumformer, Durchflußmesser und dergl. vermindern die Produktionskapazität und die mögliche Auslastung einer Anlage ganz entscheidend. Eine Verminderung von Stillstandszeiten und eine erhöhte Anlagenzuverlässigkeit setzt eine möglichst genaue Kenntnis des aktuellen Anlagenzustandes und ihrer Komponenten voraus. Dies betrifft vor allem die unvermeidlichen Abnutzungsprozesse von Anlagenkomponenten.

Strenge Auflagen der Behörden (Technische überwachungsvereine, Gewerbeaufsichtsämter usw.) in Bezug auf den immer dringlicher werdenden Umweltschutz, verlangen im Interesse einer Reinhaltung von Luft und Gewässer, daß jedwede Undichtigkeit von chemischen oder petrochemischen Anlagen vermieden und frühzeitig erkannt werden muß.

In geschlossenen, drucktragenden Anlagen, wie sie vor allem in der chemischen und petro-chemischen Industrie, in konventionellen und Nuklearkraftwerken, sowie in Raffinierien und erdölverarbeitenden Anlagen auftreten, gestaltet sich eine Beurteilung des Abnutzungsgrades außerordentlich schwierig, weil eine Schadensfeststellung und entsprechende Wartungsmaßnahme normalerweise nicht ohne ein Abschalten der Anlage und den Ausbau der Anlagenkomponenten möglich ist.

Wesentliche Bauelemente in derartigen Anlagen sind Regel- und Absperrarmaturen, d.h. Ventile, die in Kombination mit einem vorzugsweise pneumatischen Antrieb und einem Stellungsregler als Stellgeräte Verwendung finden. Übliche Schäden bei derartigen Stellgeräten - geordnet in etwa nach der Häufigkeit ihres Auftretens - sind folgende:
1. Undichte Stopfbuchse, verbunden mit Umweltverschmutzung
2. Hohe oder veränderliche Reibungskräfte, verbunden mit Hysteresis
3. Zunehmende Restleckmenge des Ventils in der geschlossenen Stellung
4. Störungen oder Ausfall des Ventil-Stellungsreglers
5. Schäden am Ventilantrieb (z.B. Reißen der Membrane)
6. Erosion bzw. Verschleiß der Innenteile durch andauernde Kavitation
7. Korrosionsschäden durch Wahl ungeeigneter Werkstoffe
8. Erosion der aus Schließkörper und Sitz bestehenden Garnitur, verbunden mit gestörtem Kennlinienverlauf.
9. Dauerbrüche von Innenteilen
10. Ausgeschlagene Führungen, Klappern ungenügende Reproduzierbarkeit.

Aus der Zeitschrift "ölhydraulik und Pneumatik", 1981, Seiten 568-573 ist es bereits bekannt, bei hydraulischen Bauelementen durch Messung von Körperschall eine Schadensfrüherkennung durchzuführen, wobei Körperschallspektren im Neuzustand des hydraulischen Bauelementes und im laufenden Betrieb aufgenommen und miteinander verglichen werden und bei Abweichung um einen vorgegebenen Pegel auf einen entstehenden oder bereits bestehenden Schaden geschlossen wird. Die Untersuchungen werden dort an Flügelzellenpumpen, d.h. an Geräten mit rotierenden Teilen, vorgenommen, wobei insbesondere mechanischer Verschleiß und Kavitation feststellbar sind. Aus der US-PS 5 197 328 ist es ferner bekannt, Drücke und einen Stellweg eines Ventils zu erfassen und sie nach Analog/Digitalwandlung einem Prozessor zuzuführen, der die ordnungsgemäße Funktion des Ventils überwacht.

Ausgehend von diesem Stand der Technik ist es die Aufgabe der vorliegenden Erfindung, eine nahezu lückenlose überwachung und Frühanzeige von Schadensfällen bei Regel- und Absperrarmaturen durchzuführen, so daß eine vorbeugende Wartung möglich ist.

Die Lösung dieser Aufgabe gelingt gemäß den kennzeichnenden Merkmalen des Patentanspruches 1. Weitere vorteilhafte Ausgestaltungen des erfindungsgemäßen Diagnose-Systems sind den abhängigen Ansprüchen entnehmbar.

Anhand der Figuren der beiliegenden Zeichnung seien im folgenden das erfindungsgemäße Diagnose-System sowie Elemente zur Verwirklichung dieses Systems näher beschrieben. Es zeigen:
- Fig. 1: die prinzipielle Anordnung eines Stellgerätes, bestehend aus einem Regelventil mit pneumatischem Antrieb und Stellungsregler;
- Fig. 2: wesentliche Komponenten eines intelligenten Stellungsreglers;
- Fig. 3: einen Teil des Regelventils mit Spezialstopfbuchse und Drucksensor zur Erkennung von Undichtheiten;
- Fig. 4: Teile eines Regelventils mit Spezialstopfbuchse und mechanischer Abtastung zur Erkennung von Undichtheiten;
- Fig. 5: die typische Grundkennlinie eines Regelventils;
- Fig. 6: eine Entartung dieser Grundkennlinie bei einem Antriebsschaden;
- Fig. 7: eine Betriebskennlinie des Regelventils;
- Fig. 8: eine Entartung dieser Betriebskennlinie bei starkem Verschleiß des Drosselkörpers;
- Fig. 9: ein typisches reproduzierbares Körperschallspektrum bei Normalbedingungen des Regelventils; und
- Fig. 10: ein Terzband der aufintegrierten Körperschallschwingungen bei einem neuwertigen und einem bereits beschädigten Regelventil.

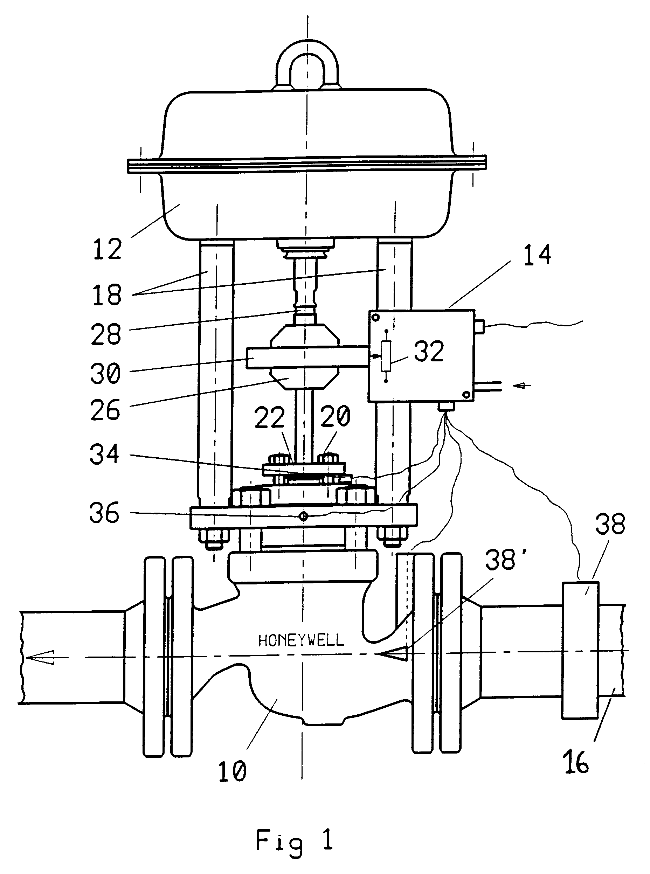

Gemäß Fig. 1 ist ein Stellgerät dargestellt, welches im wesentlichen aus einem Ventilkörper 10, einem pneumatischen Membranantrieb 12 und einem "intelligenten" Stellungsregler 14 besteht. Unter intelligentem Stellungsregler 14 wird hierbei ein mit Prozessorfähigkeiten versehener Stellungsregler verstanden, der in der Lage ist, bestimmte Größen aufzunehmen und zu verarbeiten, um entsprechend Einfluß zu nehmen bzw. entsprechende Anzeigen zu steuern.

Das Ventil 10 ist in eine Rohrleitung 16 eingebaut und steuert durch einen entsprechenden Hub eines mit einem Ventilsitz zusammenwirkenden Schließkörpers den Durchtritt eines Mediums. Bei einem vorgegebenen Druck bzw. Differenzdruck ergibt sich in Abhängigkeit vom Ventilhub eine bestimmte Druchflußmenge.

Der pneumatische Membranantrieb 12 ist über Stehbolzen 18 mit dem Ventiloberteil verbunden und Muttern 20 ziehen über eine Stopfbuchsenbrille 22 eine hier nicht näher erkennbare Stopfbuchse und Packung zur Abdichtung einer Ventilstange 24 im Ventiloberteil zusammen. Ein Verbindungsstück 26 verbindet die Ventilstange 24 mit einer Stange 28 des pneumatischen Membranantriebs 12. An dem Verbindungsstück 26 greift ein Hebel 30 an, der auf einen Stellungsgeber 32, vorzugsweise ein Potentiometer des Stellungsreglers 14, einwirkt. Die eigentliche Aufgabe des Stellungsreglers 14 besteht darin, ein normiertes elektrisches Signal von z.B. 4 - 20 mA in ein pneumatisches Drucksignal umzusetzen, das dem pneumatischen Antrieb 12 zugeführt wird und in einer entsprechenden Stellung der Ventilstange 24 resultiert. über das dargestellte Potentiometer 32 kann der Istwert elektrisch mit dem elektrischen Sollwertsignal verglichen werden.

Der in dem Stellungsregler 14 enthaltene Prozessor ist als digitaler Signalprozessor ausgebildet und an verschiedene Sensoren angeschlossen. Diese Sensoren werden gebildet durch den Stellungssensor 32, ein die Dichtigkeit der Stopfbuchse überwachenden Sensor 34, der vorzugsweise ein Drucksensor ist, einen Körperschallsensor 36, der an einer mit dem Ventiloberteil verbundenen Traverse angeordnet ist und einen Durchflußsensor 38, der dem Stellgerät beigestellt werden kann oder auch in Form eines Vortex-Sensors 38' in ein Flanschauge des Ventilkörpers 10 integriert sein kann. Die durch den Stellungssensor 32 vorgegebene Rückführung des Istwertsignales könnte auch durch einen Drucksensor in dem pneumatischen Antrieb 12 ersetzt werden. Weitere Drucksensoren können vorgesehen sein, um den Druck des Mediums bzw. den Differenzdruck des Mediums zu messen. Der Stellungsregler 14 ist mit einer genormten Schnittstelle versehen, um über einen Feldbus mit einer zentralen Warte eines Prozeßleitsystems zu kommunizieren bzw. um einen Anschluß für einen tragbaren Personalcomputer vorzugeben. Ferner kann der üblicherweise in der Meßwarte vorgesehene PID-Regler in den Stellungsregler integriert sein.

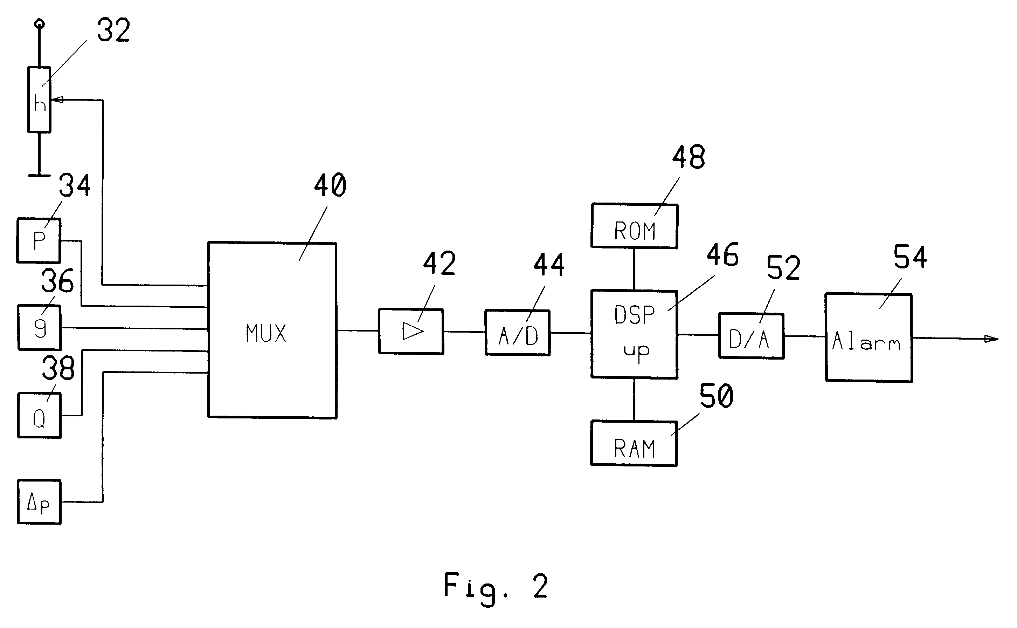

Fig. 2 zeigt die Beschaltung des in dem Stellungsregler 14 enthaltenen Prozessors, soweit sie für die Verwirklichung der vorliegenden Erfindung benötigt wird. Die verschiedenen analogen Sensoren 32 - 38 sind über einen Multiplexer 40 und ggf. einen Verstärker 42 an einen Analog/Digital-Wandler 44 angeschlossen, dessen digitale Ausgangssignale einem digitalen Signalprozessor 46 zugeführt werden, der in der üblichen Weise an einen Festwertspeicher ROM-48 und einen Speicher mit wahlfreiem Zugriff ROM-50 angeschlossen ist, um gemäß in dem ROM gespeicherten Programmen die digitalisierten Meßwerte aufzubereiten und zu analysieren und mit vorgegebenen Norm- und Pegelwerten zu vergleichen, um bei unzulässiger Abweichung eine Fehleranzeige zu setzen bzw. über einen Digital/Analog-Wandler 52 eine analoge Anzeige 54 zu steuern.

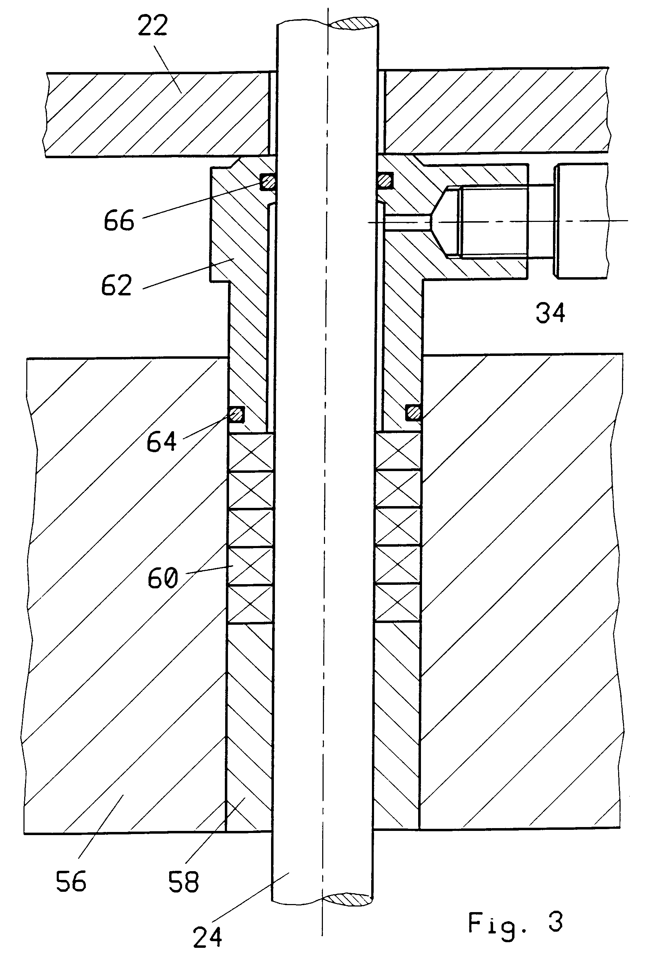

Fig. 3 zeigt ein Ausführungsbeispiel zur überwachung der Dichtheit der Stopfbuchse mit einem Drucksensor 34. Die Ventilstange 24 ist im Ventiloberteil 56 mittels einer Führungsbuchse 58 zentriert und durch eine nachstellbare Packung, die aus mehreren Packungsringen 60 besteht, nach außen abgedichtet. Im Idealfall wird hierbei eine vollkommene Dichtheit bei minimaler Reibung bzw. Hysterese erreicht. In der Praxis ist jedoch eine dauernde Dichtheit nicht aufrechtzuerhalten. Deshalb ist von Zeit zu Zeit ein Nachstellen der Packung notwendig, wobei die Muttern 20 der Stopfbuchsenbrille 22 gemäß Fig. 1 angezogen werden müssen. Dabei bewegt sich eine Stopfbuchse 62 weiter in das Oberteil hinein und komprimiert die zum Teil elastischen Packungsringe, die sich dadurch fester an die Ventilstange 24 bzw. an die Wandungen des Oberteils 56 anschmiegen und erneut Dichtheit herstellen. Um ein regelmäßiges Nachstellen zu vermeiden, wurden spezielle Packungskonfigurationen bislang entwickelt, die z.B. durch Federn eine automatische Nachstellung der Packung gewährleisten sollen. Eine tatsächliche überprüfung der Dichtheit findet allerdings nicht statt. Diese überprüfung ist auch vom Wartungspersonal nicht immer auf einfache Art und Weise durchzuführen. Bei Flüssigkeiten ist eine Dichtheitsüberprüfung noch relativ einfach, weil sich Undichtheiten durch benetzte Oberflächen leicht nachweisen lassen. Auch bei Dampf als Betriebsstoff kann eine undichte Stangendurchführung durch Auftreten einer Dampffahne oder zumindest durch gesammeltes Kondenzwasser leicht erkannt werden. Bei Gasen wird die Überprüfung allerdings schon sehr schwierig, wenn man von stark riechenden Gasen einmal absieht. Durch Verwendung einer Spezialstopfbuchse, die zwei O-Ringe 64 und 66 enthält, ist jedoch - wie gezeigt - eine überprüfung der Dichtheit relativ einfach möglich. Der O-Ring 64 ist statisch zwischen der Stopfbuchse 62 und dem Ventiloberteil 56 angeordnet und der O-Ring 66 ist dynamisch zwischen Ventilstange 24 und Stopfbuchse 62 angeordnet. Geht man nunmehr davon aus, daß die statische Dichtung mittels des O-Ringes 64 vollkommen dicht ist und die dynamische Dichtung mittels des O-Ringes 66 zumindest den größten Teil einer Leckage zurückhält, so muß sich innerhalb der Spezialstopfbuchse 62 ein Druck aufbauen, der von dem Miniaturdrucksensor 34 erfaßt und in ein elektrisches Signal umgewandelt wird. Dieses Signal wird dem vorhandenen Stellungsregler zugeführt und in dem Prozessor ausgewertet.

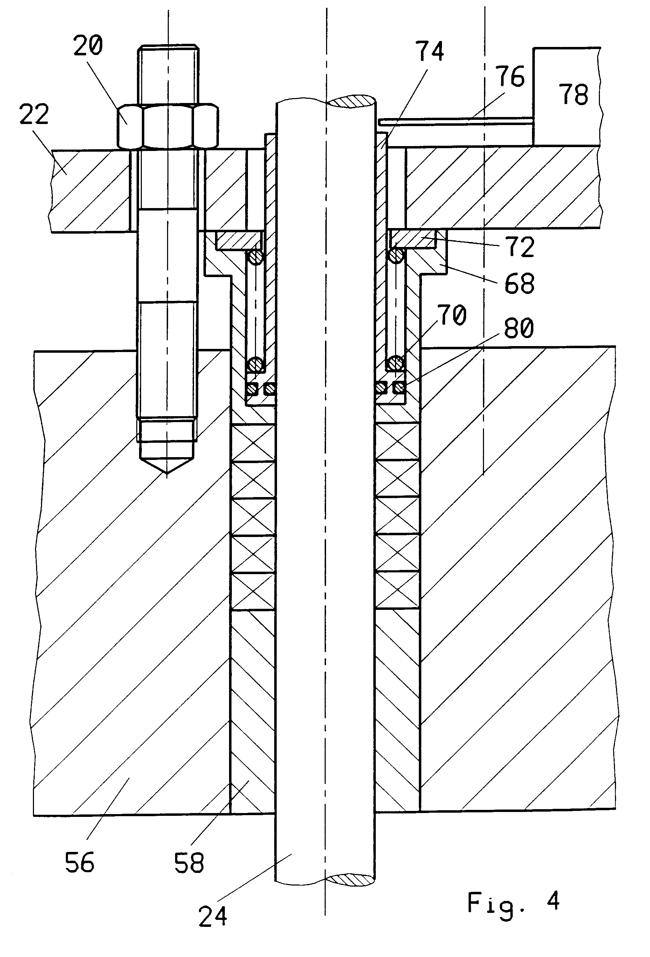

Fig. 4 zeigt eine modifizierte Anordnung zur überwachung der Dichtheit einer Stopfbuchsenanordnung. Dort enthält die Spezialstopfbuchse 68 eine Feder 70, die von einem Blech 72 niedergehalten wird. Die Feder sorgt dafür, daß ein Leckmengenindikator 74 in Form eines Kolbens beim Nichtvorhandensein einer Leckmenge stets eine extreme untere Position einnimmt.

Beim Auftreten einer Packungsleckage wird wird der kolbenförmige Indikator 74, der aus einem korrosionsfesten Material mit guten Gleiteigenschaften, z.B. aus PTFE besteht, nach oben geschoben, wobei er ein Betätigungsblech 76 eines Mikroschalters 78 berührt und ein Signal auslöst. Dichtlippen am unteren Teil des kolbenförmigen Indikators werden von einem Spreizring 80 sowohl gegen die Ventilstange 24 als auch gegen die Innenwandung der Spezialstopfbuchse 68 gedrückt und sorgen für einen dichten Abschluß. Das Signal des Mikroschalters 78 wird wiederum dem Prozessor in dem Stellungsregler zugeführt.

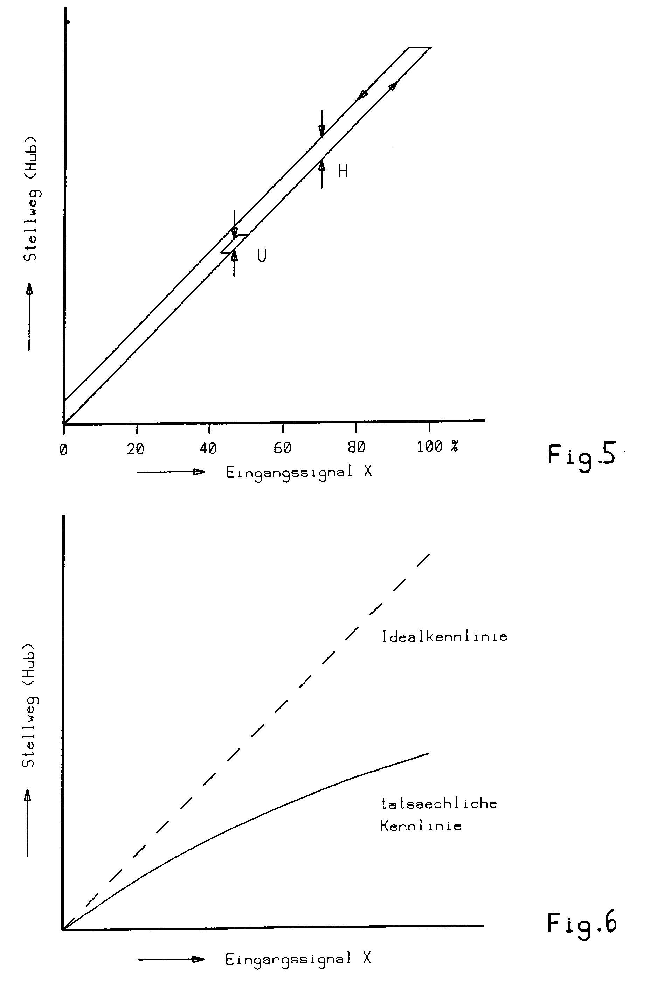

Zur Überwachung von zu großer Reibung (Hysterese) und der Funktionstüchtigkeit des pneumatischen Antriebs wird gemäß Fig. 5 vor Inbetriebnahme des kompletten Stellgerätes unter praxisnahen Bedingungen die Grundkennlinie einschließlich Umkehrspanne U und Hysterese H ermittelt, indem in Abhängigkeit von dem Eingangssignal X der Stellweg, d.h. der Hub des Antriebes aufgenommen wird. Dies ist in einfacher Weise mit Hilfe des Positionsgebers 32 gemäß Fig. 1 möglich. Die aufgenommene Kennlinie wird in dem dem Mikroprozessor zugeordneten Speicher abgespeichert. Im laufenden Betrieb des Stellgerätes deutet eine überschreitung der maximalen Hysterese H oder der normalen Umkehrspanne U auf eine erhöhte Reibung des Stellgerätes hin, was z.B. durch eine zu fest angezogene Stopfbuchse oder durch erhöhte innere Reibung in der Armatur bedingt sein kann. Auch diese Abweichungen von den Normwerten werden durch den Mikroprozessor signalisiert, da im Falle der Ignorierung dieser Erscheinungen nicht nur die Regelbarkeit des Stellgerätes leidet, sondern auch ein Fressen in der Führung und damit ein Totalausfall des Stellgerätes auftreten kann.

Ein anderer häufig anzutreffender Schadensfall ist ein Reißen oder Undichtwerden der Membran innerhalb des pneumatischen Antriebes. Dies äußert sich unweigerlich in einer Entartung der ursprünglich aufgenommenen und gespeicherten Kennlinie des Stellgerätes, wie dies in Fig. 6 veranschaulicht ist. In einem solchen Fall wird im Innern des Membranantriebs nicht mehr der volle Betriebsdruck aufgebaut, so daß der Stellweg entsprechend der Gegenkraft der Rückstellfedern verkürzt wird. Durch eine periodische oder permanente überwachung der Grundkennlinie des Stellgerätes werden auch solche Fehler und Schadensfälle diagnostizierbar.

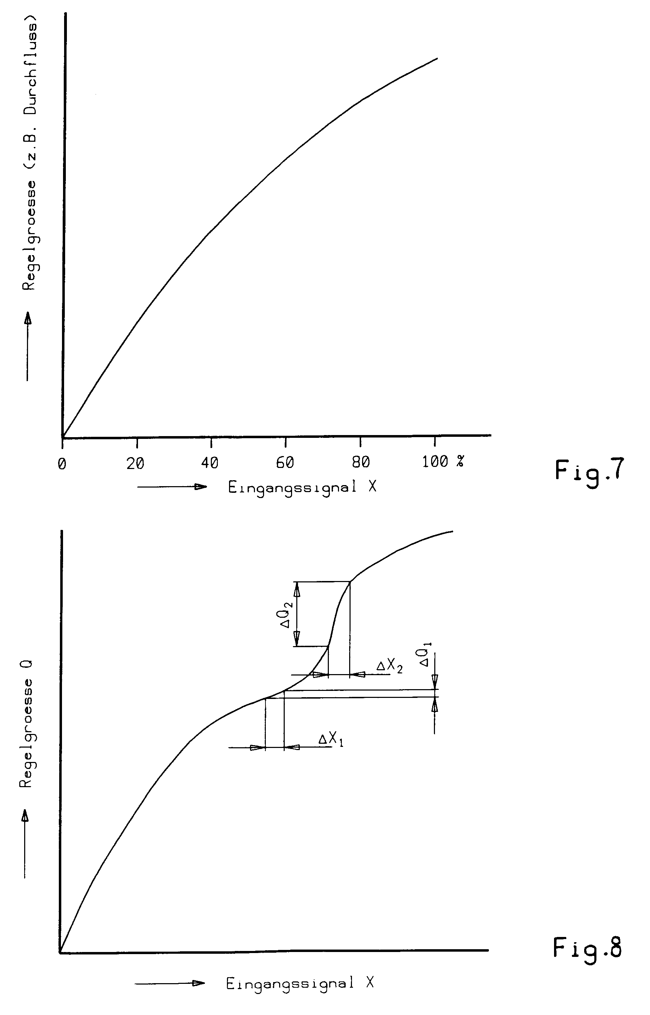

Eine Lose oder ein partieller Verschleiß des Drosselelementes, d.h. des Schließkörpers des Ventils, beeinträchtigen die Regelbarkeit des Stellgerätes und sind daher auf jeden Fall zu vermeiden. Das Drosselelement ist in der Regel ein veränderlicher Querschnitt im Innern der Armatur, üblicherweise wird ein konzentrischer Sitzring und ein sogenannter Kegel als Schließkörper verwendet, der in den Sitzring eintaucht und - abhängig vom Stellweg, d. h. vom Hub - den Drosselquerschnitt verstellt. Eine übliche Betriebskennlinie ist in Fig. 7 dargestellt, wobei über dem Eingangssignal X die Regelgröße, d.h. im vorliegenden Fall der Durchfluß dargestellt ist.

Lose und Verschleiß äußern sich in einem unstetigen Verlauf dieser Betriebskennlinie. Dabei kann sich die Verstärkung des Regelkreises erheblich verändern, was zu einem instabilen Betrieb führt, wie dies in Fig. 8 dargestellt ist. Hat man die Betriebskennlinie bei normalen Prozeßbedingungen gemäß Fig. 7 bei Inbetriebnahme des Stellgerätes als Funktion des Reglereingangssignals X aufgenommen und in dem dem Prozessor zugeordneten Speicher abgespeichert, so ist es bei vorhandenem Durchflußmesser möglich, jegliche Abweichung von dieser normalen Betriebskennlinie festzustellen. Da allerdings auch bei geänderten Betriebsbedingungen, z.B. bei geringerem Eingangsdruck die Betriebskennlinie des Durchflusses verändert wird, erfordert eine genaue Beurteilung des Zustandes noch die Berücksichtigung weiterer Einflußgrößen, wie z.B. den Eingangsdruck oder den Differenzdruck.

Auch kann man die mittlere oder lokale Verstärkung des Stellgerätes, die anhand der Kennliniensteilheit dX/dQ ermittelt wird, in Betracht ziehen, wobei dQ die Durchflußänderung, z.B. in kg/h bei einer Änderung des Eingangssignales dX, z.B. in mA oder als digitale Größe darstellt. Da bei einer integrierten Lösung, d.h. bei dem Prozeßregler im Stellungsreglergehäuse der zuletzt genannte Wert identisch mit dem Reglerausgangssignal Y ist, müssen natürlich auch die Einstellparameter des PID-Reglers, die gewöhnlich nach der Grundeinstellung bei der Inbetriebnahme nicht mehr verändert werden, mit in Betracht gezogen werden.

Sowohl für den erlaubten Verlauf der Grundkennlinie nach den Figuren 5 und 6, als auch für den Verlauf der Betriebskennlinie nach den Figuren 7 und 8 wird ein Toleranzband festgelegt und ferner werden Grenzwerte für den Differentialquotienten dx/dQ, der die Steilheit der Betriebskennlinie ausdrückt, ermittelt. Sobald dieses Toleranzband oder die Grenzwerte der Betriebskennliniensteilheit überschritten werden, wird im Diagnosestatus ein Alarm ausgegeben. Hinweise für mögliche Schadensursachen ergeben sich aus der Richtung und Größe der Abweichungen von den Ausgangskennlinien.

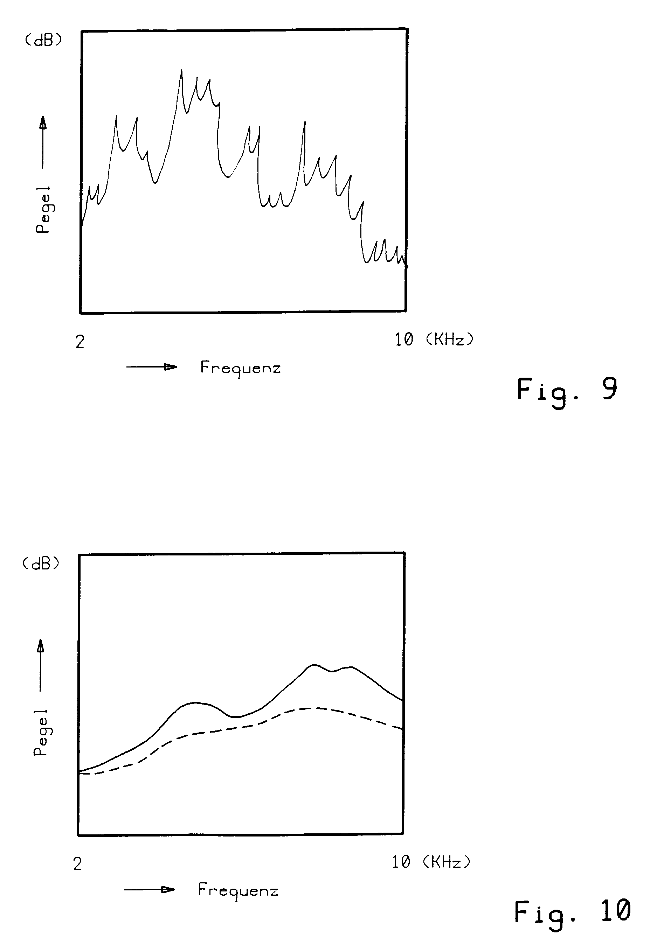

Figur 9 zeigt ein typisches reproduzierbares, durch den Körperschallsensor aufgenommenes Spektrum im Normal-Betriebszustand des Ventils. Hierbei sind die durch einen Beschleunigungsaufnehmer ermittelten Schwingungen des Ventils über der Frequenz, vorzugsweise in einem Bereich von 2 - 10 kHz, aufgetragen.

In Fig. 10 ist das Terzband der Schwingungen bei einem neuwertigen Ventil gestrichelt und bei einem bereits beschädigten Ventil in ausgezogenen Linien dargestellt. Durch Bildung des Flächenintegrals und Vorgabe einer tolerierbaren Abweichung kann auch hier ein schadhaftes Ventil erkannt werden, wobei sich durch diese Messung insbesondere Verschleiß bedingt durch Korrosion, Kavitation oder Erosion feststellen lassen.

Alle Diagnosen werden entweder periodisch durch einen eingebauten Zeitgeber oder bei besonders kritischen Regelungen permanent durchgeführt. Immer wird ein Vergleich mit den Ausgangskennlinien durchgeführt und bei Abweichung um einen vorbestimmten Betrag ein Alarm ausgelöst. Dieser Alarm kann in die zentrale Warte über den Feldbus signalisiert werden. Andererseits ist es auch möglich, bei einem Betrieb in einem Prozeßleitsystem die Diagnose manuell von der Warte aus zu initialisieren.

Selbstverständlich kann auch eine Weiterverarbeitung und Registrierung der Meßwerte mittels Personalcomputer und entsprechender Software direkt am Stellgerät erfolgen. Hierbei ist eine graphische Erfassung und Darstellung aller Meßwerte und Kennlinien möglich.

## Patentansprüche

1. Diagnose-System für Regel- und Absperrventile, wobei das Ventil (10) mit einem Antrieb (12) und einem Stellungsregler (14) versehen ist, mit einem an verschiedene Sensoren angeschlossenen Prozessor zur Überwachung des Ventilbetriebs, **dadurch gekennzeichnet,** daß das System umfaßt:
a) eine Einrichtung (32,38) zur Erfassung und Speicherung von Betriebsgrößen und Kennlinien des Ventils;
b) eine Einrichtung (36) zur Erfassung und Speicherung von Körperschallspektren an dem Ventil und
c) eine Einrichtung (34,76,78) zur Überwachung der Dichtheit einer Stopfbuchse (62,68) des Ventils.

2. Diagnose-System nach Anspruch 1, **dadurch gekennzeichnet,** daß der Prozessor (46) im Stellungsregler (14) angeordnet und als digitaler Signalprozessor ausgebildet ist.

3. System nach Anspruch 1 oder 2, **dadurch gekennzeichnet,** daß in einem an den Prozessor (46) angeschlossenen Speicher (50) die Betriebsgrößen und Kennlinien abgespeichert sind, die mit den gleichen Sensoren (32-38) bei einwandfreiem Betrieb des Ventils aufgenommen worden sind.

4. System nach Anspruch 1 oder 2, **gekennzeichnet durch** einen Stellungssensor (32) zur Ermittlung des Stellweges einer Ventilstange (24).

5. System nach Anspruch 1 oder 2, **gekennzeichnet durch** einen Drucksensor (34) zur Feststellung der Dichtheit einer Stopfbuchse (62,68).

6. System nach Anspruch 1 oder 2, **gekennzeichnet durch** einen Körperschallsensor (36) an dem Ventilgehäuse zur Ermittlung von vorübergehender oder permanenter Kavitation und dadurch bedingtem Verschleiß.

7. System nach Anspruch 1 oder 2, **gekennzeichnet durch** einen Durchflußmesser (38,38') zur Erfassung des Mengendurchflusses durch das Ventil (10).

8. System nach Anspruch 7, **gekennzeichnet durch** Drucksensoren zur Erfassung des Eingangsdruckes bzw. des Differenzdruckes des durch das Ventil (10) fließenden Mediums.

9. System nach Anspruch 4, **gekennzeichnet durch** die Aufnahme und Abspeicherung einer Grundkennlinie (Hub über Eingangsgröße) für das Ventil (10).

10. System nach Anspruch 7 oder 8**, gekennzeichnet durch** die Aufnahme und Abspeicherung einer Betriebskennlinie (Durchfluß über Eingangsgröße) für das Ventil (10).

11. System nach Anspruch 10, **gekennzeichnet durch** die Aufnahme und Abspeicherung einer Kennliniensteilheit (dQ/dX) für das Ventil (10).

12. System nach Anspruch 6, **gekennzeichnet durch** die Aufnahme und Abspeicherung von Körperschallspektren für das Ventil (10).

13. System nach Anspruch 5, **gekennzeichnet durch** die Vorgabe und Abspeicherung von Grenzwerten für den Druck.

14. System nach Anspruch 5, **dadurch gekennzeichnet,** daß die Stopfbuchse (62) über O-Ring-dichtungen (64,66) gegen ein Ventil-Oberteil (56) und gegen eine Ventilstange (24) abgedichtet ist und daß unterhalb der mit der Ventilstange (24) zusammenwirkenden Ringdichtung (66) ein Ringraum angeordnet ist, an den der Drucksensor (34) angeschlossen ist.

15. System nach Anspruch 5, **dadurch gekennzeichnet,** daß die Stopfbuchse (68) der Aufnahme eines gegen die Kraft einer Feder (70) verschiebbaren Kolbens (74) dient, der gegen die Ventilstange (24) und die Stopfbuchse (68) abgedichtet geführt ist und mit einem Schalter (78) zusammenwirkt.

16. System nach einem der Ansprüche 1 bis 11, **gekennzeichnet durch** die Vorgabe von Toleranzbändern bezüglich der im Betrieb der Armatur aufgenommenen Meßwerte und Kennlinien, Vergleich mit den gespeicherten Meßwerten und Kennlinien und Signalisierung eines Alarmes bei einer über das Toleranzband hinausgehenden Abweichung.

17. System nach Anspruch 16, **gekennzeichnet durch** eine genormte Schnittstelle an dem Stellungsregler (14) zum Anschluß eines Personalcomputers oder zum Anschluß über einen Feldbus an die zentrale Warte eines Prozeßzeitsystems zwecks Ferndiagnose.
